# EUROPÄISCHE PATENTSCHRIFT

(11) **EP 2 213 902 B1**
(45) Veröffentlichungstag und Bekanntmachung des Hinweises auf die Patenterteilung: **06.07.2016**
(21) Anmeldenummer: 09151898.5
(22) Anmeldetag: 02.02.2009
(51) Int. Cl.: F16D 65/12, C04B 35/573, C04B 35/80, F16D 69/02

(54) **Reibscheiben mit strukurierter Reibschicht**
Friction disks having a structured friction layer
Disques de friction avec une couche de friction structurée

(43) Veröffentlichungstag der Anmeldung: 04.08.2010
(73) Patentinhaber: SGL Carbon SE, 65201 Wiesbaden (DE)
(72) Erfinder: Elster, Bernd, 86672, Thierhaupten (DE); Kienzle, Andreas, Dr., 86405 Meitingen (DE); Krätschmer, Ingrid, 86405 Meitingen (DE); Wittke, Christian, 86405 Meitingen (DE); Willemin, Yannik, 86405 Meitingen (DE)

(56) Entgegenhaltungen:
- EP-A- 0 770 791
- EP-A1- 1 346 969
- EP-A2- 0 864 548
- EP-B1- 1 251 290
- EP-B1- 1 273 818
- EP-B1- 1 314 708
- DE-A1- 10 233 729
- DE-A1-102006 009 565
- DE-C1- 19 711 829

## Beschreibung

Die Erfindung betrifft Reibscheiben mit mindestens einer strukturierten Reibschicht sowie Verfahren zu deren Herstellung.

Reibscheiben mit keramischen Reibschichten sind bekannt unter anderem aus dem Europäischen Patent EP 1 273 818 B1. In dem Europäischen Patent EP 1 251 290 B1 sind solche Reibscheiben beschrieben, deren Reibschicht Ausnehmungen aufweist, die radial-trapezförmige, spiral- oder evolventenförmig gekrümmte, ellipsenförmige, kreisförmige oder polygonale Gestalt aufweisen können und eine Verbesserung der Kühlung der Carbon-Keramik-Reibscheibe bewirken. Aus dem Europäischen Patent EP 1 314 708 B1 ist ein Formkörper aus faserverstärkten Verbundwerkstoffen mit segmentierter Deckschicht bekannt. Dabei sind die Segmente aus keramischem Material bevorzugt durch Stege oder stegförmige Bereiche von gegenüber der Reibschicht unterschiedlichem Material voneinander getrennt. Der mittlere Durchmesser der Segmente ist bevorzugt mindestens 3 mm, und die Dicke der Stege beträgt vorzugsweise 0,1 mm bis 10 mm.

Es ist bekannt, dass das Bremsverhalten bei Nässe beeinträchtigt wird durch den auf der Bremsscheibe und auf dem Bremsbelag ausgebildeten Wasser- oder Feuchtigkeitsfilm. Eine ebenfalls bekannte Gegenmaßnahme ist das Anbringen von Perforationsbohrungen in der Reibfläche vorzugsweise senkrecht zu dieser, die auch die gesamte Bremsscheibe teilweise oder ganz durchsetzen können. Diese Gegenmaßnahme ist nicht immer ausreichend. Durch Abrieb vom Material der Bremsscheibe und besonders von den Bremsbelägen sowie auch Schmutz und Staub von der Fahrbahn kann sich gemeinsam mit Feuchtigkeit oder Wasser ein Schmierfilm auf der Reibfläche ausbilden, der das Bremsverhalten zusätzlich verschlechtert.

Bei den der vorliegenden Anmeldung zugrunde liegenden Untersuchungen wurde gefunden, dass sich insbesondere bei Carbon-Keramik-Bremsscheiben eine Verbesserung des Nassansprechverhaltens und eine Beschleunigung des Aufbaus eines konstanten Reibverhaltens durch ein Aufteilen der Reibschicht in einzelne Segmente ergibt, wobei die Segmente der Reibschicht voneinander durch Nuten, also rillenoder grabenförmige Vertiefungen in der Reibschicht, getrennt sind.

Das Nassansprechverhalten lässt sich durch Störung des Aufbaus dieses Schmier-und Wasserfilms und dessen schnelleren Abbau verbessern. Es wurde gefunden, dass geometrische Parameter, nämlich die Abmessungen der Segmente sowie die Abmessungen der Nuten in Abhängigkeit von der Dicke der Reibschicht, die Ausbildung des Schmier- und Wasserfilms beeinflussen. Die Ausbildung dieses Schmier- oder Wasserfilms wird besonders stark unterdrückt, und dessen Abbau bei Bremsen wird besonders beschleunigt, wenn die folgenden Parameter für die Nuten und Segmente eingehalten werden:
Die Fläche der Segmente liegt im Bereich von 1 mm² bis 250 mm², bevorzugt von 3 mm² bis 150 mm², und besonders bevorzugt von 10 mm² bis 80 mm². Dabei ist es günstig, wenn die Fläche der Segmente eine enge Verteilung aufweist, beispielsweise die Standardabweichung der Größe der Segmente nicht mehr als 30 %, bevorzugt nicht mehr als 20 % des Mittelwerts beträgt. Es ist weiter günstig, wenn der arithmetische Mittelwert, jeweils gemessen an einer Reibfläche, des Verhältnisses der größten Erstreckung der Fläche eines Segments, bestimmt als Durchmesser des Umkreises, zur kleinsten Erstreckung der Fläche desselben Segments, bestimmt als Radius des Inkreises, nicht mehr als 4, bevorzugt nicht mehr als 3, und insbesondere nicht mehr als 2,5 beträgt.

Die Breite der Nuten, gemessen an der Reibfläche, beträgt bevorzugt zwischen 0,1 mm und 5 mm, besonders bevorzugt zwischen 0,2 mm und 4 mm, und insbesondere zwischen 0,5 mm und 3 mm. Auch hier hat es sich als günstig erwiesen, wenn die Standardabweichung der Nutenbreite in einer Bremsscheibe oder in jeweils einer Reibfläche, nicht mehr als 30 %, bevorzugt nicht mehr als 20 % des Mittelwerts beträgt. Bei Breiten der Nuten von bis zu 1,8 mm, bevorzugt 0,5 mm bis 1,6 mm, ergibt sich eine nur sehr geringe Geräuschentwicklung beim Bremsen.

Die Tiefe der Nuten soll mindestens 0,4 mm betragen, da bei geringeren Nutentiefen kein oder nur ein unzureichender Effekt auf die Ausbildung des Schmier- oder Wasserfilms erreicht wird. Die günstigste Wirkung ergibt sich erwartungsgemäß, wenn die Tiefe der Nuten möglichst groß ist. Der bevorzugte Bereich für die Tiefe der Nuten liegt daher bei 0,6 mm bis höchstens zur gesamten Reibschichtdicke.

Es wurde weiter gefunden, dass bei einer Nutentiefe von maximal 90 % der Dicke der Reibschicht eine bei der Silicierung gebildete Kehle am Grund der Nut und an den dem Grund der Nut benachbarten Teilen der Seitenwände der Nut eine Abdichtung des unteren Teils der Nut bewirkt und insbesondere das Eindringen oder Eindiffundieren von Wasser oder wäßrigen Flüssigkeiten verhindert. Diese Kehle besteht im wesentlichen (also zu mehr als 80 % ihres Volumens) aus Silicium oder der zur Infiltration verwendeten siliciumhaltigen Legierung. Dringt Wasser oder eine wäßrige Flüssigkeit wie die beim Streuen von Auftausalz im Winter auf den Fahrbahnen gebildete Salzlake in die Reibscheibe oder den Spalt zwischen Reibschicht und Tragkörper ein, so können sich insbesondere bei cyclischen Temperaturänderungen Einschlüsse in Poren in der Reibscheibe bilden oder die Haftung der Lagen verschlechtern und es kann zu Ausbrüchen oder Abplatzungen kommen.

Durch die oben beschriebene Ausbildung einer Kehle am Nutengrund wird dieses Eindringen verhindert, und die Bildung von Ausbrüchen und Abplatzungen wirkungsvoll vermindert. Die Bildung einer Verbindungsschicht über die gesamte Fläche des Zylinderrings vermindert auch die Tendenz zur Delamination.

Die Delaminationsbeständigkeit von Reibscheiben mit keramikreichen Reibschichten ist besonders gut, wenn die Segmente der Reibschicht nicht vollständig durch die Nuten getrennt werden, sondern durch einen möglichst großen Teil der Materialstärke der Reibschichten im Grund der Nut verbunden sind. Dies verhindert ebenfalls das Eindringen von Wasser oder wäßrigen Flüssigkeiten in das Innere der Reibscheibe.

Die Erfindung betrifft daher Reibscheiben mit strukturierter Reibschicht, wobei die Reibschicht durch Nuten in Segmente unterteilt ist, wobei die Segmente eine Fläche im Bereich von 1 mm² bis 250 mm² aufweisen, und wobei die Tiefe der Nuten mindestens 0,4 mm beträgt und maximal der Dicke der Reibschicht entspricht, und die Breite der Nuten zwischen 0,1 mm und 5 mm beträgt, wobei die Gestalt der Segmente so gewählt wird, dass das Verhältnis des Radius des Umkreises zum Radius des Inkreises bei mindestens 80 % der Segmente höchstens 4 beträgt.

Die Erfindung betrifft auch ein Verfahren zur Herstellung von Reibscheiben mit strukturierter Reibschicht, bei dem ein Vorkörper für einen Tragkörper aus mit Fasern aus Kohlenstoff verstärktem Kunststoff oder gehärtetem Kunstharz ("CFK-Körper"), bevorzugt einem gehärtetem Phenolharz, in Zylinderringform bereitgestellt wird, dieser Vorkörper gegebenenfalls in einer Variante bei einer Temperatur von 750 °C bis 1300 °C unter Ausschluß von oxydierenden Gasen zu einem sogenannten "CFC-Körper" carbonisiert und danach abgekühlt wird, auf diesen Vorkörper auf mindestens eine von dessen Deckflächen eine Pressmasse für die Reibschicht aus einem organischen, carbonisierbaren Bindemittel, insbesondere Pech oder Kunstharzen oder Mischungen von diesen, bevorzugt einem Phenolharz, aufgepresst wird, wobei das Bindemittel gegebenenfalls Fasern aus Kohlenstoff und/oder Füllstoffe enthalten kann, und wobei in die Pressmasse für die Reibschicht ein Gitterstegnetz eingepresst wird, dessen Stege den dadurch einzuformenden Nuten in Gestalt und Abmessungen entsprechen, der gebildete Verbundkörper bei der für das Bindemittel erforderlichen Härtungstemperatur ausgehärtet wird und bei einer Temperatur von 750 °C bis 1300 °C unter Ausschluß von oxydierenden Gasen zu einem Verbund aus Tragkörper und mindestens einer Reibschicht carbonisiert wird, und der carbonisierte Körper anschließend einer gemeinsamen Infiltration mit Silicium bei einer Temperatur von 1420 °C bis 1800 °C bei vermindertem Druck unterworfen wird, und wobei das Gitterstegnetz aus einem Material geformt ist, das während der Schritte der Carbonisierung und/oder der Silicierung pyrolysiert wird, wobei nicht mehr als 10 % der ursprünglichen Masse des Gitterstegnetzes nach der Pyrolyse zurückbleiben.

Die Erfindung betrifft ein weiteres Verfahren zur Herstellung von Reibscheiben mit strukturierter Reibschicht, bei dem ein Vorkörper für einen Tragkörper aus mit Fasern aus Kohlenstoff verstärktem Kunststoff oder gehärtetem Kunstharz, bevorzugt einem gehärtetem Phenolharz, in Zylinderringform bereitgestellt wird, dieser Vorkörper gegebenenfalls in einer Variante bei einer Temperatur von 750 °C bis 1300 °C unter Ausschluß von oxydierenden Gasen carbonisiert und danach abgekühlt wird, auf diesen Vorkörper auf mindestens eine von dessen Deckflächen eine Pressmasse für die Reibschicht aus einem organischen, carbonisierbaren Bindemittel, insbesondere Pech oder Kunstharzen oder Mischungen von diesen, bevorzugt einem Phenolharz, aufgepresst wird, wobei das Bindemittel gegebenenfalls Fasern aus Kohlenstoff und/oder Füllstoffe enthalten kann, und wobei auf der Seite der Pressmasse für die Reibschicht eine oberflächlich strukturierte Pressplatte eingesetzt wird, die oberflächlich auf der der Pressmasse zugewandten Seite solche Erhebungen aufweist, die den dadurch einzuformenden Nuten in Gestalt und Abmessungen entsprechen, der gebildete Verbundkörper bei der für das Bindemittel erforderlichen Härtungstemperatur ausgehärtet wird und bei einer Temperatur von 750 °C bis 1300 °C unter Ausschluß von oxydierenden Gasen zu einem Verbund aus Tragkörper und mindestens einer Reibschicht carbonisiert wird, und der carbonisierte Körper anschließend einer gemeinsamen Infiltration mit Silicium bei einer Temperatur von 1420 °C bis 1800 °C bei vermindertem Druck unterworfen wird.

Die Erfindung betrifft weiter die Verwendung der so erhaltenen Carbon-Keramik-Bremsscheiben in Bremssystemen für Automobile, Lastkraftwagen, Eisenbahnen, und Flugzeuge.

Reibscheiben gemäß der Erfindung umfassen einen Kern- oder Tragkörper, der zylinderringförmig ausgebildet ist, und mindestens eine ebenfalls zylinderringförmige Reibschicht, die mindestens eine Deckfläche des Zylinderrings bedeckt. Es ist auch möglich, den Tragkörper aus mehr als einem Zylinderring zu bilden, wobei dann die benachbarten Zylinderringe so ausgebildet sind, dass der innere Durchmesser des jeweils äußeren Zylinderrings größer oder gleich dem äußeren Durchmesser des nach innen benachbarten Zylinderringes ist, und dass jeweils die beiden benachbarten Zylinderringe durch einen zylindermantelförmigen oder kegelstumpfmantelförmigen Körper miteinander verbunden sind. Die mindestens eine Reibschicht bedeckt dann üblicherweise den äußersten Zylinderring.

Der Tragkörper ist ein faserverstärkter Formkörper mit einer keramischen Matrix, der vorzugsweise einen Massenanteil von 30 % bis 70 % an Siliciumcarbid, einen Massenanteil von vorzugsweise 20 % bis 60 % an Verstärkungsfasern, und weiter einen Massenanteil von vorzugsweise 0 % bis 30 % an Silicium enthält. Der Tragkörper besteht in bevorzugter Weise aus mit überwiegend durch Kurzfasern oder Kurzfaserbündeln aus Kohlenstoff verstärktem, als C/SiC bezeichneten Material. Als Kurzfasern werden hier Fasern mit einer mittleren Länge von bis zu 50 mm bezeichnet. Es können jedoch zusätzlich auch Langfasern oder Bündel von Langfasern mit mittleren Längen von über 50 mm eingesetzt werden. Bei den Fasern handelt es sich bevorzugt um kohlenstoffhaltige Fasern, besonders bevorzugt Kohlenstoff- oder Graphitfasern, insbesondere solche, die mit Kohlenstoff beschichtet sind, der beispielsweise durch Pyrolyse einer Kunstharz- oder Pech-Beschichtung auf den Fasern gebildet wird.

Die Reibschicht enthält bevorzugt jeweils einen geringeren Massenanteil an Verstärkungsfasern als der Tragkörper, und einen höheren Massenanteil an Siliciumcarbid und/oder einen höheren Massenanteil an Silicium als der Tragkörper, wobei der Massenanteil an Siliciumcarbid in jedem Fall größer als 30 % ist, wobei der Massenanteil an Siliciumcarbid in % bevorzugt um mindestens 10 größer als der des Tragkörpers.

Die Zusammensetzung der Reibschicht liegt bevorzugt bei einem Massenanteil an Fasern im Bereich von 0 % bis 35 %, der Massenanteil an SiC in der Reibschicht liegt im Bereich von 45 % bis 100 %, und der Massenanteil an Si in der Reibschicht liegt im Bereich von 0 % bis 30 %, bezogen auf die Gesamtmasse der Reibschicht. Solche Reibschichten werden als "keramikreiche" Reibschichten bezeichnet.

Der Unterschied zwischen Tragkörper und Reibschicht zeigt sich auch in der Materialdichte. Für Tragkörper ist diese üblicherweise mindestens 1,9 g/cm³, bevorzugt zwischen 2,2 g/cm³ bis 2,5 g/cm³. Die Dichte der Reibschicht beträgt üblicherweise mindestens 2 g/cm³, bevorzugt von 2,3 g/cm³ bis 2,6 g/cm³. Vorzugsweise liegt die Dichte der Reibschicht um mindestens 5 % höher als die Dichte der Tragkörper. Weitere bevorzugte Ausführungsformen sind in den Unteransprüchen 2 bis 10 beschrieben.

Je nach Anwendungsfall und Bedarf sind bei den erfindungsgemäßen Reibscheiben unterschiedliche Dicken der Reibschicht möglich. Für Anwendungen in Automobil-Bremsscheiben liegt die Dicke der SiC-reichen Reibschicht üblicherweise im Bereich von 0,1 mm bis 5 mm, bevorzugt bei mindestens 0,5 mm bis zu höchstens 1,5 mm.

Die Herstellung der erfindungsgemäßen Reibscheiben erfolgt bevorzugt gemäß den in den Ansprüchen 11 bis 14 beschriebenen Verfahren.

Es ist auch möglich, jedoch weniger bevorzugt, einen Vorkörper für einen Tragkörper aus mit Fasern aus Kohlenstoff verstärktem Kunststoff oder gehärtetem Kunstharz, bevorzugt einem gehärtetem Phenolharz, in Zylinderringform bereitzustellen, diesen Vorkörper bei einer Temperatur von 750 °C bis 1300 °C unter Ausschluß von oxydierenden Gasen zu einem Tragkörper zu carbonisieren, und auf diesen carbonisierten Tragkörper auf mindestens eine von dessen Deckflächen eine in einem separaten Schritt bei den oben genannten Bedingungen ebenfalls carbonisierte die Reibschicht bildende Scheibe mit eingefrästen Nuten flächig so aufzukleben, dass die offenen Seiten der Nuten dem Tragkörper abgewandt sind, wobei die Nuttiefen von 0,4 mm bis zu 90 % der Dicke der Reibschicht betragen, und das aus dem Tragkörper und mindestens einer aufgeklebten Reibschicht bestehende Gebilde anschließend einer gemeinsamen Infiltration mit Silicium bei einer Temperatur von 1420 °C bis 1800 °C bei vermindertem Druck zu unterwerfen.

Ebenso ist es möglich, jedoch weniger bevorzugt, einen Vorkörper für einen Tragkörper aus mit Fasern aus Kohlenstoff verstärktem Kunststoff oder gehärtetem Kunstharz, bevorzugt einem gehärtetem Phenolharz, in Zylinderringform bereitzustellen, auf diesen Vorkörper auf mindestens eine von dessen der Deckflächen eine die Reibschicht bildende Scheibe aus mit optional mit Fasern aus Kohlenstoff verstärktem und/oder mit Füllstoffen versehenen Kunststoff oder gehärtetem Kunstharz, bevorzugt einem gehärtetem Phenolharz, mit eingefrästen Nuten flächig aufzukleben, wobei die Nuttiefen von 0,4 mm bis zu 90 % der Dicke der Scheibe betragen, und das aus dem Tragkörper und mindestens einer aufgeklebten die Reibschicht bildenden Scheibe bestehenden Gebilde zunächst bei einer Temperatur von 750 °C bis 1300 °C unter Ausschluß von oxydierenden Gasen zu einem Verbund aus Tragkörper und mindestens einer Reibschicht zu carbonisieren, anschließend einer gemeinsamen Infiltration mit Silicium bei einer Temperatur von 1420 °C bis 1800 °C bei vermindertem Druck zu unterwerfen.

In beiden oben genannten Verfahrensweisen kann das Einfräsen der Nuten bevorzugt erst nach dem Aufkleben des die Reibschicht bildenden Körpers auf den Tragkörper erfolgen, dadurch wird die Handhabbarkeit wesentlich erleichtert.

Für den schnellen Abbau des die Reibeigenschaften störenden Wasser- und Partikelfilms zwischen Reibscheibe und Reibbelag haben sich zusätzlich rauhe Oberflächenstrukturen an der Reibscheibe als besonders günstig erwiesen. Es wurde jedoch festgestellt, dass die Rauhtiefe der Oberfläche bei Nutzung der Bremse rasch abnimmt, wobei durch die Schleifwirkung (Verschleiß) beim Bremsen die Oberfläche geglättet wird, und mindestens ein Teil der offen zugänglichen Poren durch Abrieb oder Staub gefüllt wird. Die erfindungsgemäße Oberflächenstruktur der Reibschicht mit möglichst kleinen Segmenten ermöglicht die Aufteilung des gebildeten Films in ebenfalls kleine Bereiche, wobei die den Film bildende Flüssigkeit mit darin aufgeschlämmten Feststoffen (Straßenschmutz, Abrieb aus der Bremse) im reibenden Eingriff zwischen Bremsscheibe und Bremsbelag schneller von der Reibfläche abgewischt und durch die tiefer liegenden Bereiche der Nuten und damit aus dem Reibpfad heraus transportiert werden kann. Die Nuten weisen daher bevorzugt ein Volumen auf, das diese Flüssigkeit nebst dem Abrieb und Schmutz aus dem Reibbereich sicher aufnehmen und abtransportieren kann.

Dieser positive Effekt kann während der Lebensdauer der Reibscheibe nur dann aufrechterhalten werden, wenn die Nuten erfindungsgemäß eine solche Tiefe aufweisen, die deutlich über der Abnahme der Dicke der Reibschicht durch Verschleiß während der Lebensdauer der Reibscheibe liegt.

Dies wird erfindungsgemäß durch das Einbringen von Nuten sichergestellt, die in verschiedenen Richtungen verlaufen und sich kreuzen können. Es ist bevorzugt, dass ein großer Teil der Nuten, nämlich mindestens 30 %, die im Außenbereich der Zylinderringscheibe liegen, möglichst radial oder höchstens in einem Winkel von 40° zum Radius an der Schnittstelle mit dem äußeren Umfang verläuft. Diese Nuten sind bevorzugt zum äußeren Umfang hin offen. Die Nuten bilden bevorzugt jeweils einen durchgehenden Furchenzug, wobei aneinanderstoßende Nuten an der Verbindungsstelle bevorzugt einen stumpfen Winkel einschließen. Es ist eine besonders bevorzugte Variante, einen Teil der Nuten so auszubilden, dass diese konzentrische Kreise bilden, deren Mittelpunkt in der Achse der Bremsscheibe liegt.

Zur Reduzierung der Anzahl von Arbeitsgängen und zur Reduzierung von Fehlern und Ausschuss beim Einbringen der Nuten hat sich das Vorbereiten oder das Einbringen der Nuten schon in die Reibschicht als günstig herausgestellt. Besonders bevorzugt ist für das Verfahren die Verwendung eines Gitterstegnetzes aus einem möglichst vollständig, also rückstandsfrei oder rückstandsarm, pyrolysierbaren Werkstoff, wobei die Stege des Gitterstegnetzes in Form und Lage den gewünschten Nuten entsprechen. Dieses Gitterstegnetz wird in eine Pressform eingelegt, die Zwischenräume werden dann mit der Pressmasse für die Reibschicht aufgefüllt und dieses Gebilde wird gemeinsam zu einem CFK-Körper für die Reibschicht verpresst. Es ist auch möglich, die Zwischenräume in dem Gitterstegnetz vor dem Einbringen in die Pressform mit der Pressmasse für die Reibschicht zu befüllen, und dieses befüllte Gitterstegnetz in die Pressform einzubringen. Hierbei ist es günstig, das Gitterstegnetz mit einem Boden aus demselben Material zu versehen, wodurch der Boden bei dem Carbonisierungsschritt rückstandsarm oder rückstandsfrei pyrolysiert und der hierdurch entstehende Spalt zwischen Tragkörper und Reibschicht bei Silicieren mit Silicium wie mit einem Hartlot aufgefüllt wird. Unter "rückstandsfrei pyrolysierbar" wird hier ein Material verstanden, das bei Pyrolyse bei einer Temperatur von 750 °C bis 1300 °C einen Rückstand von höchstens 0,5 % der Ausgangsmasse hinterläßt. "Rückstandsarm pyrolysierbar" im Sinne der Erfindung ist ein solches Material, wenn bei diesen Bedingungen ein Rückstand von bis zu 10 % der Ausgangsmasse zurückbleibt. Dieser CFK-Körper für die Reibschicht kann nun auf einem CFK-Körper für den Tragkörper vorzugsweise durch Kleben fixiert werden, bevorzugt werden zwei dieser CFK-Körper für die Reibschicht auf einem CFK-Körper für den Tragkörper fixiert, und dieser Verbund wird gemeinsam zuerst carbonisiert und dann siliciert, bei den oben beschriebenen Bedingungen.

Die erfindungsgemäßen Reibscheiben lassen sich für Anwendungen in Brems- und in Kupplungssystemen nutzen. Als Vorteil ergibt sich auch durch die erfindungsgemäße Wahl der geometrischen Parameter der Struktur in der Reibschicht die Abwesenheit oder weitgehende Unterdrückung von Rissen in Ebenen parallel zu den Deckflächen der zylinderringförmigen Reibscheiben und der dadurch bedingten Ablösungen. Diese sind zwar nicht an der Oberfläche zu sehen, können jedoch zum Versagen des Bauteils bei hoher Rotationsgeschwindigkeit führen.

### Beispiele:

### Beispiel 1 Tragkörper

In den Untersuchungen im Zusammenhang mit der vorliegenden Erfindung wurden jeweils Vorkörper aus mit Kurzfasern aus Kohlenstoff verstärktem gehärtetem Phenolharz für Tragkörper in Zylinderringform mit einem äußeren Durchmesser von 380 mm, einem inneren Durchmesser von 150 mm und einer Dicke von 25 mm bereitgestellt.

Diese Tragkörper wurden beidseitig mit erfindungsgemäß strukturierten Reibschichten versehen gemäß den folgenden Verfahren:

### Beispiel 2

Ein Vorformling für die Reibschicht wurde hergestellt durch Einlegen eines kreisringförmigen Gitterstegnetzes aus Polypropylen, einem im wesentlichen rückstandsfrei pyrolysierbaren Material, mit verschiedenen Formen, Stärken und Abständen der Stege in eine zylindrische Pressmulde und Auffüllen des Raumes zwischen den Gitternetzstegen mit einer pressfähigen Reibschichtmischung aus einer Mischung aus gleichen Massen eines pulverförmigen Phenolharzes und eines pulverförmigen Festpechs mit einer Erweichungstemperatur von ca. 90 °C, mit einem Kohlenstoff-Kurzfasergehalt von ca. 1 % und einer mittleren Faserlänge von 5 mm, Pressen des Vorformlings bei ca. 180 °C, und Entnahme aus der Pressmulde nach Abkühlen. Der Vorformling wurde dann auf dem Tragkörper gemäß Beispiel 1 mittels eines Phenolharzklebers fixiert, der Verbund wurde bei 900 °C unter einem Argonstrom unter Pyrolyse carbonisiert, wobei an den Stellen der Gitterstege nach der Pyrolyse Nuten gleicher Gestalt wie die ursprünglich vorhandenen Gitternetzstege verbleiben, und anschließend gemeinsam siliciert bei 1700 °C und bei vermindertem Druck.

### Beispiel 3

In eine zylinderförmige Pressmulde wurde ein Tragkörper eingelegt, und eine ca. 4,5 mm hohe Schicht der Reibschichtmischung gemäß Beispiel 2 aufgefüllt. Darauf wurden unterschiedliche Pressstempel-Einsätze mit erhabenen Stegen aufgelegt, deren Form, Größe und Lage den gewünschten Nuten entsprach, mit deren Hilfe in der jeweils aufgepressten Schicht konzentrische kreisförmige Nuten mit unterschiedlichen Nutbreiten und Nuttiefen in unterschiedlichen Abständen, und den jeweils passenden radialen Nuten geformt wurden, Härten der aufgepressten strukturierten Reibschicht während 20 Minuten in der Presse bei 165 °C und einem Pressdruck von 1 MPa, Abkühlen und Entnehmen der Verbunde aus der Presse und Carbonisieren der Verbunde bei 900 °C unter einem Argonstrom, und anschließend gemeinsames Silicieren bei 1700 °C bei vermindertem Druck.

Beide Verfahrensvarianten sind besonders günstig, da hier die Handhabung der mechanisch empfindlichen Vorkörper für die Reibschicht vereinfacht wird oder ganz entfällt.

Dabei wurde die Nutbreite für jeden so hergestellten Probekörper einheitlich gewählt mit jeweils 0,2 mm, 0,5 mm, 1,5 mm, 2,0 mm, 2,5 mm und 3,0 mm. Die Nuttiefe betrug bei einer Reibschichtdicke von jeweils 2,5 mm: 0,2 mm, 0,4 mm, 0,6 mm, 1,0 mm und 2,5 mm. Die Fläche der Segmente betrug zwischen ca. 4 mm² und 900 mm².

Es wurde gefunden, dass Segmentflächen zwischen ca. 10 mm² und 40 mm² sowohl ein gutes Nassansprechverhalten des Bremssystems und - ausweislich des Rißgefügebildes - ein niedriges Spannungsniveau in der Reibscheibe ergeben. Dies gilt ebenfalls für Nutbreiten von 0,5 mm bis zu 3,0 mm, welche sich neben dem günstigen Nassanspruchverhalten auch für die Aufnahme bzw. den Abtransport von Abrieb aus dem Bremssystem als günstig erwiesen haben. Eine Nutbreite von mehr als 1 mm verbessert die Aufnahme des hauptsächlich vom Bremsbelag herrührenden Abriebs und verhindert auch die vollständige Füllung einer Nut mit flüssigem Silicium beim Silicieren.

Es wurde weiter gefunden, dass eine Nuttiefe von 0,2 mm unzureichend war für eine Verbesserung des Nassansprechverhaltens über Lebensdauer (Fadingzyklen bis zu einem Masseverlust von 100 g), ausreichende Werte ergaben sich jedoch für Nuttiefen ab 0,6 mm bis hin zu der Dicke der gesamten Reibschicht.

Wird die Nuttiefe kleiner gewählt als die Reibschichtdicke, erhält man eine günstigere Delaminationsbeständigkeit. Es wurde gefunden, dass solche der erfindungsgemäßen Carbon-Keramik-Bremsscheiben, bei denen die Nuttiefe maximal 90 % der Reibschichtdicke beträgt, deutlich weniger empfindlich sind gegen Abplatzen von Teilen der Reibfläche bei cyclischen Belastungen der Scheibe mit Kälte, Wärme und Salzlösungen, insbesondere bei keramikreichen Reibschichten.

Bei den Versuchen wurde gefunden, dass sich die Reibschichten bei einem Verhältnis der mittleren Längen- und Breitenerstreckung der Segmente zur Tiefe der Nuten von mehr als 2 als mechanisch besonders stabil erweisen.

In den Versuchen wurden serienmäßige organisch gebundene Bremsbeläge verwendet, nämlich phenolharzgebundene Beläge mit Zuschlägen von Kupfer und Magnesiumoxid.

## Patentansprüche

1. Reibscheiben mit strukturierter Reibschicht, wobei die Reibschicht durch Nuten in Segmente unterteilt ist, wobei die Segmente eine Fläche im Bereich von 1 mm² bis 250 mm² aufweisen, und wobei die Tiefe der Nuten mindestens 0,4 mm beträgt und maximal der Dicke der Reibschicht entspricht, und die Breite der Nuten zwischen 0,1 mm und 5 mm beträgt, **dadurch gekennzeichnet, dass** die Gestalt der Segmente so gewählt wird, dass das Verhältnis des Radius des Umkreises zum Radius des Inkreises bei mindestens 80 % der Segmente höchstens 4 beträgt, und dass die Nuten am äußeren Rand der Scheibe so auftreffen, dass der Richtungsvektor der Nut am Schnittpunkt mit dem äußeren Umfang mit dem radialen Vektor zu diesem Schnittpunkt einen Winkel von höchstens 50° einschließt.

2. Reibscheiben gemäß Anspruch 1, **dadurch gekennzeichnet, dass** mindestens ein Teil der Nuten zum äußeren Rand des Formkörpers hin offen ist.

3. Reibscheiben gemäß Anspruch 1 oder Anspruch 2, **dadurch gekennzeichnet, dass** mindestens 30 % der Nuten, die im Außenbereich der Zylinderringscheibe liegen, höchstens in einem Winkel von 40° zum Radius an der Schnittstelle mit dem äußeren Umfang verlaufen.

4. Reibscheiben gemäß einem oder mehreren der Ansprüche 1 bis 3, **dadurch gekennzeichnet, dass** die die Segmente trennenden Fugen eine Breite von mindestens 0,1 mm und bevorzugt eine Tiefe zwischen 0,3 mm bis 90 % der gesamten Reibschichtdicke aufweisen.

5. Reibscheiben gemäß einem oder mehreren der Ansprüche 1 bis 4, **dadurch gekennzeichnet, dass** das Verhältnis der Quadratwurzel aus der mittleren Segmentfläche zur mittleren Nutenbreite mindestens 1 beträgt.

6. Reibscheiben gemäß einem oder mehreren der Ansprüche 1 bis 5, **dadurch gekennzeichnet, dass** das Verhältnis der Quadratwurzel aus der mittleren Segmentfläche zur mittleren Tiefe der Nuten mindestens 2 beträgt.

7. Reibscheiben gemäß einem oder mehreren der Ansprüche 1 bis 6, **dadurch gekennzeichnet, dass** die mittlere Segmentfläche im Bereich von 10 mm² bis 40 mm² liegt.

8. Reibscheiben gemäß einem oder mehreren der Ansprüche 1 bis 7, **dadurch gekennzeichnet, dass** die Nuten einen jeweils durchgehenden Furchenzug bilden, der aus stetigen Kurven wie Kreisen, Ellipsen, Spiralen, Evolventen, Geraden, Abschnitten von solchen Kurven oder unstetigen Folgen aus Abschnitten der genannten Kurven besteht.

9. Reibscheiben gemäß einem oder mehreren der Ansprüche 1 bis 8, **dadurch gekennzeichnet, dass** ein Teil der Nuten die Form von konzentrischen Ringfurchen aufweist, wobei deren Zentrum auf der Symmetrieachse der Scheibe liegt.

10. Reibscheiben gemäß einem oder mehreren der Ansprüche 1 bis 9, **dadurch gekennzeichnet, dass** die Reibschicht eine Dicke von 0,5 mm bis 4 mm aufweist.

11. Verfahren zur Herstellung von Reibscheiben mit einem Tragkörper und mit mindestens einer strukturierten Reibschicht gemäß einem oder mehreren der Ansprüche 1 bis 10, bei dem zunächst
- im ersten Schritt eine Mischung aus mindestens einem organischen Bindemittel ausgewählt aus Kunstharzen und Pechen, kohlenstoffhaltigen Lang- oder Kurzfasern, die gebündelt sein können und/oder mit einer Beschichtung überzogen sein können, und/oder Füllmitteln, hergestellt wird,
- im zweiten Schritt die Mischung unter erhöhtem Druck und/oder erhöhter Temperatur zu einem Vorkörper für den Tragkörper geformt wird,
- optional im dritten Schritt bei einer Temperatur von 750 °C bis 1300 °C unter Ausschluss von oxydierenden Gasen carbonisiert wird, anschließend
- im vierten Schritt mit einer Pressmasse für die Reibschicht aus einem optional Fasern aus Kohlenstoff und/oder Füllstoffe enthaltenden organischen, carbonisierbaren Bindemittel, insbesondere Pech oder Kunstharzen oder Mischungen von diesen, bevorzugt einem Phenolharz, überzogen wird,
- im fünften Schritt zum Herstellen eines aus mit Fasern aus Kohlenstoff verstärkten Kohlenstoff bestehenden Formkörpers bei einer Temperatur von 750 °C bis 1300 °C unter Ausschluss von oxydierenden Gasen carbonisiert wird, der daran anschließend
- im sechsten Schritt mit schmelzflüssigem Silizium unter vermindertem Druck und/oder unter Inertgas infiltriert wird,
**dadurch gekennzeichnet, dass** die auf den Tragkörper aufgebrachte Pressmasse für die Reibschicht mit einem entsprechend geformten Werkzeug die Nuten durch Einpressen direkt erhält.

12. Verfahren nach Anspruch 11, **dadurch gekennzeichnet, dass** die Reibschicht mit einem entsprechend den Ansprüchen 1 bis 10 gestalteten Werkzeug zur Erzeugung der Nuten auf den Tragkörper aufgeformt wird.

## Claims

1. Friction discs comprising a structured friction layer, the friction layer being divided into segments by means of grooves, the segments having a surface area a the range of from 1 mm² to 260 mm², and the depth of the grooves being at least 0.4 mm and corresponding at most to the thickness of the friction layer, and the width of the grooves being of between 0.1 mm and 5 mm, **characterised in that** the shape of the segments is selected such that the ratio of the radius of the circumcircle to the radius of the incircle for at least 80 % of the segments is at most 4, and **in that** the grooves impinge on the outer edge of the disc such that the direction vector of the groove at the intersection with the outer circumference forms an angle of at most 50° with the radial vector at this intersection.

2. Friction discs according to claim 1, **characterised in that** at least some of the grooves are open towards the outer edge of the moulded body.

3. Friction discs according to either claim 1 or claim 2, **characterised in that** at least 30 % of the grooves that are located in the outer region of the cylinder ring disc extend at most at an angle of 40° to the radius at the intersection with the outer circumference.

4. Friction discs according to one or more of claims 1 to 3, **characterised in that** the gaps separating the segments have a width of at least 0.1 mm and preferably a depth of between 0.3 mm and 90 % of the entire friction layer thickness.

5. Friction discs according to one or more of claims 1 to 4, **characterised in that** the ratio of the square root of the average segment surface area to the average groove width is at least 1.

6. Friction discs according to one or more of claims 1 to 5, **characterised in that** the ratio of the square root of the average segment surface area to the average depth of the grooves is at least 2.

7. Friction discs according to one or more of claims 1 to 6, **characterised in that** the average segment surface area is in the range of from 10 mm² to 40 mm².

8. Friction discs according to one or more of claims 1 to 7, **characterised in that** the grooves each form an uninterrupted furrow line which consists of continuous curves such as circles, ellipses, spirals, involutes, straight lines, portions of such curves or discontinuous sequences of portions of the mentioned curves.

9. Friction discs according to one or more of claims 1 to 8, **characterised in that** some of the grooves are in the shape of concentric annular furrows, the centre of which lie on the axis of symmetry of the disc.

10. Friction discs according to one or more of claims 1 to 9, **characterised in that** the friction layer has a thickness of from 0.5 mm to 4 mm.

11. Method for producing friction discs comprising a support body and comprising at least one structured friction disc according to one or more of claims 1 to 10 in which, initially,
- in the first step, a mixture is produced from at least one organic binder selected from synthetic resins and pitches, carbon-containing long or short fibres which can be bundled together and/or can be coated with a coating, and/or filler,
- the mixture is shaped in the second step at increased pressure and/or increased temperature to form a preform for the support body,
- is optionally carbonised in the third step in the absence of oxidising gases at a temperature of between 750 °C and 1300 °C, is subsequently
- coated in the fourth step with a moulding material for the friction layer made of a carbonisable organic binder optionally containing carbon fibres and/or filler, in particular pitch or synthetic resins or mixtures thereof, preferably a phenol resin,
- is carbonised at a temperature of between 750 °C and 1300 °C in the fifth step in the absence of oxidising gases in order to produce a moulded body consisting of carbon that is strengthened by carbon fibres,
- is subsequently infiltrated in the sixth step with molten silicon at reduced pressure and/or under inert gas,
**characterised in that** the moulding material for the friction layer applied to the support body directly obtains the grooves by pressing by means of a correspondingly shaped tool.

12. Method according to claim 11, **characterised in that** the friction layer is moulded onto the support body in order to produce the grooves by means of a tool which is formed according to claims 1 to 10.

## Revendications

1. Disques de friction avec couche de friction structurée, dans lesquels la couche de friction est divisée en segments par des rainures, dans lesquels les segments présentent une surface dans la plage de 1 mm² à 250 mm², et dans lesquels la profondeur des rainures est d'au moins 0,4 mm et correspond au maximum à l'épaisseur de la couche de friction, et la largeur des rainures est comprise entre 0,1 mm et 5 mm, **caractérisés en ce que** la forme des segments est choisie de telle sorte que le rapport du rayon du cercle circonscrit au rayon du cercle inscrit est au maximum de 4 pour au moins 80 % des segments, et **en ce que** les rainures rencontrent le bord extérieur du disque de sorte que le vecteur de direction de la rainure au niveau de l'intersection avec le périmètre extérieur forme un angle de 50° au maximum avec le vecteur radial à cette intersection.

2. Disques de friction selon la revendication 1, **caractérisés en ce qu'**au moins une partie des rainures est ouverte en direction du bord extérieur du corps façonné.

3. Disques de friction selon la revendication 1 ou la revendication 2, **caractérisés en ce qu'**au moins 30 % des rainures qui sont situées dans la zone extérieure du disque annulaire cylindrique forment au maximum un angle de 40° avec le rayon au niveau de l'interface avec le périmètre extérieur.

4. Disques de friction selon l'une ou plusieurs des revendications 1 à 3, **caractérisés en ce que** les joints séparant les segments présentent une largeur d'au moins 0,1 mm et de préférence une profondeur entre 0,3 mm et 90 % de l'épaisseur totale de la couche de friction.

5. Disques de friction selon l'une ou plusieurs des revendications 1 à 4, **caractérisés en ce que** le rapport de la racine carrée de la surface moyenne de segments à la largeur moyenne de rainures est au moins égal à 1.

6. Disques de friction selon l'une ou plusieurs des revendications 1 à 5, **caractérisés en ce que** le rapport de la racine carrée de la surface moyenne de segments à la profondeur moyenne de rainures est au moins égal à 2.

7. Disques de friction selon l'une ou plusieurs des revendications 1 à 6. **caractérisés en ce que** la surface moyenne de segments est dans la plage de 10 mm² à 40 mm².

8. Disques de friction selon l'une ou plusieurs des revendications 1 à 7, **caractérisés en ce que** les rainures forment, respectivement, un sillon ininterrompu qui se compose de courbes continues telles que cercles, ellipses, spirales, développantes, droites, tronçons de telles courbes ou séquences discontinues de tronçons des courbes citées.

9. Disques de friction selon l'une ou plusieurs des revendications 1 à 8, **caractérisés en ce qu'**une partie des rainures présente la forme de sillons annulaires concentriques dans lesquels leur centre est situé sur l'axe de symétrie du disque.

10. Disques de friction selon l'une ou plusieurs des revendications 1 à 9, **caractérisés en ce que** la couche de friction présente une épaisseur de 0,5 mm à 4 mm.

11. Procédé de fabrication de disques de friction avec un corps de support et avec au moins une couche de friction structurée selon l'une ou plusieurs des revendications 1 à 10, dans lequel, d'abord,
- dans la première étape, un mélange d'au moins un liant organique sélectionné parmi des résines synthétiques et des poix, de fibres longues ou courtes contenant du carbone, qui peuvent être groupées en faisceau et/ou recouvertes d'un revêtement, et/ou de charges, est fabriqué,
- le mélange est formé dans la deuxième étape sous pression élevée et/ou à température élevée pour donner un précorps pour le corps de support,
- est carbonisé optionnellement dans la troisième étape à une température de 750 °C à 1 300 °C, en absence de gaz oxydants, ensuite
- est revêtu dans la quatrième étape avec une matière à mouler pour la couche de friction à partir d'un liant carbonisable organique contenant optionnellement des fibres de carbone et/ou des charges, en particulier de la poix ou des résines synthétiques ou des mélanges de celles-ci, de préférence une résine phénolique,
- est carbonisé dans la cinquième étape pour la fabrication d'un corps façonné composé de carbone renforcé de fibres de carbone, à une température de 750 °C à 1 300 °C en l'absence de gaz oxydantes, qui ensuite
- est infiltré dans la sixième étape avec du silicium en fusion sous pression réduite et/ou en présence de gaz inerte,
**caractérisé en ce que** la matière à mouler appliquée sur le corps de support pour la couche de friction reçoit directement les rainures par pressage avec un outil formé de façon correspondante.

12. Procédé selon la revendication 11, **caractérisé en ce que** la couche de friction est formée avec un outil constitué selon les revendications 1 à 10 pour la production des rainures sur le corps de support.
